**Europäisches Patentamt**

**European Patent Office**

**Office européen des brevets**

(19)

(11) Veröffentlichungsnummer: **0 083 454**
**B2**

(12) # NEUE EUROPÄISCHE PATENTSCHRIFT

(45) Veröffentlichungstag der neuen Patentschrift:
**05.10.88**

(21) Anmeldenummer: **82112110.0**

(22) Anmeldetag: **30.12.82**

(51) Int. Cl.⁴: **A 41 D 13/00, A 63 B 71/12, B 32 B 3/00**

(54) Schutzvorrichtung.

(30) Priorität: **31.12.81 CH 8368/81**

(43) Veröffentlichungstag der Anmeldung:
**13.07.83 Patentblatt 83/28**

(45) Bekanntmachung des Hinweises auf die Patenterteilung:
**23.04.86 Patentblatt 86/17**

(45) Bekanntmachung des Hinweises auf die Entscheidung über den Einspruch:
**05.10.88 Patentblatt 88/40**

(84) Benannte Vertragsstaaten:
**AT BE DE FR GB IT NL SE**

(56) Entgegenhaltungen:
**DE - A - 1 560 754**
**DE - A - 3 005 001**
**FR - A - 2 418 630**
**US - A - 1 685 825**
**US - A - 1 841 193**
**US - A - 3 125 762**
**US - A - 3 248 738**
**US - A - 3 285 768**
**US - A - 3 516 898**
**US - A - 3 523 853**
**US - A - 3 867 239**
**US - A - 3 882 547**
**US - A - 4 136 226**
**US - A - 4 241 457**

(73) Patentinhaber: **Filmer, Dierk, Tweehörnweg 20, D-2930 Varel 1 (DE)**

(72) Erfinder: **Sawatzki, Harry L., Im Gapetsch 23, FL-9494 Schaan (LI)**
Erfinder: **Koller, Markus, Südikweg 4, CH-8964 Rudolfstetten (CH)**
Erfinder: **Schaedler, Hansjörg, Eschestrasse 517c, FL-9492 Eschen (LI)**

(74) Vertreter: **Büchel, Kurt F., Dr., Patentanwalt Dr. Kurt F. Büchel Bergstrasse 297, FL-9495 Triesen (LI)**

EP 0 083 454 B2

ACTORUM AG

# Beschreibung

Die Erfindung betrifft eine flächige Schutzvorrichtung gegen Stoss oder Schlag, bestehend aus einer dem zu schützenden Körper zugewandten flexiblen Unterlage, auf der einander benachbarte, druckfeste Elemente befestigt sind, wobei die Unterlage zugfest ausgebildet ist.

Nun sind bereits eine Reihe von Schutzvorrichtungen dieser Art bekannt geworden, die aber im wesentlichen als Schutz gegen Schüsse oder Stiche dienten und die Beweglichkeit des Trägers, bzw. eine Krümmung flächiger Teile in jede Richtung ermöglichten. Eine solche z.B. kugelsichere Weste ist daher keinesfalls geeignet, ein Abknikken des Rumpfes nach hinten im Fall eines auf den Rücken treffenden Stosses oder Schlages zu verhindern.

Der Körper soll in wenigstens einer – insbesondere der dem erwarteten Stoss oder Schlag entgegengesetzten Richtung beweglich bleiben. Eine solche Schutzvorrichtung ist beispielsweise für das Rückgrat von Sportlern, Motorradfahrern etc. zweckmässig, das bei einem Unfall leicht einem Stoss oder Schlag aus einer bestimmten Richtung, nämlich von hinten, ausgesetzt sein kann, der dann häufig zu einer Querschnittslähmung oder gar zum Tode führt.

Nun war man zwar bisher in der Lage, den Kopf durch einen Schutzhelm zu sichern, was aber im Verhältnis zum Rumpf deshalb einfacher ist, weil der Kopf auch bei Bewegung seines Trägers die äussere Form unverändert beibehält. Dies ist bekanntlich beim Rumpf nicht der Fall. Für das Rückgrat muss daher eine Vorrichtung geschaffen werden, die es gestattet, den Körper nach vorne zu neigen, bzw. zu krümmen, dass jedoch ein Schlag von hinten nicht zu einer Knickung nach hinten führt. Ein Schutzanzug nach Art einer Ritterrüstung kommt wegen des hohen Gewichtes und der mangelnden Beweglichkeit ja nicht in Frage.

Es liegt daher der Erfindung die Aufgabe zugrunde, eine Schutzvorrichtung zu schaffen, die einerseits die Beweglichkeit ihres Trägers nicht einschränkt und entsprechend leicht ist, andererseits aber einen guten Schutz gegen Schlag, Stoss oder Druck aus einer bestimmten Richtung gewährt. Dies wird erfindungsgemäss durch die Kombination der Merkmale des Anspruchs 1 erreicht. Eine solche Schutzvorrichtung gestattet das Biegen, Neigen oder Krümmen des Körpers nach der der zu schützenden Seite abgewandten Vorderseite, bietet jedoch einer von der zu schützenden Hinterseite einwirkenden Kraft einen Widerstand wie ein starrer Schild.

Die Elemente können in wenigstens einer Reihe angeordnete, z.B. vierseitige, Prismen sein, die im Falle eines geradlinigen Verlaufes der Schutzvorrichtung rechteckigen Querschnitt, im Falle eines gekrümmten, beispielsweise der Wirbelsäule folgenden, Verlaufes zumindest teilweise trapezförmigen Querschnitt aufweisen. Sofern die zu schützende Fläche in mehr als einer Ebene gekrümmt ist oder werden soll, ist es zweckmässig, wenn die Elemente die Form von Pyramiden oder Pyramidenstümpfen aufweisen, wobei sie dann in wenigstens zwei Reihen vorliegen.

Es ist klar erkennbar, dass die Elemente im Falle einer Krafteinwirkung von aussen mit ihren einander zugewandten Flächen aufeinandergepresst werden und daher zweckmässigerweise zumindest in diesem Bereiche eine besonders hohe Druckfestigkeit, gegebenenfalls sogar eine nur geringe Elastizität aufweisen, um ein allfälliges Durchfedern zu verhindern. Für viele Anwendungsfälle, insbesondere solche, bei denen die Schutzvorrichtung von einem Menschen getragen wird, scheiden die an sich besonders druckfesten Metalle aus Gewichtsgründen aus. Es ist daher zweckmässig, wenn die Elemente nur an ihren Aussenflächen und/oder Seitenflächen wenigstens eine, die Druckfestigkeit senkrecht zum Schlag erhöhende Schicht aufweisen. Der Block kann dann innen hohl oder nur von einem Fachwerk erfüllt sein bzw. können sowohl das Blockelement selbst oder der einen allfälligen Hohlraum ausfüllende Kern auch aus Strukturschaum, insbesondere Polyurethan-Integralschaum, bestehen. Die die Druckfestigkeit der Elemente in Richtung senkrecht zu einem zu erwartenden Schlag oder Stoss erhöhende(n) Schicht(en) können entweder aus glasfaserverstärktem Kunststoff oder Metall gebildet sein, können jedoch auch aus einem mit dem Polyurethan-Schaumkern integral verbundenen, druckfesten Polyurethan-Material bestehen.

Besonders wichtig ist natürlich die hohe Zugbzw. Reissfestigkeit der Verbindung der Elemente miteinander, die erst die Bildung eines starren Schutzschildes bei Stoss- oder Schlageinwirkung von aussen ergibt. Die Verbindung kann durch Scharniere erfolgen, ist jedoch gemäss einer bevorzugten Ausführungsform dann besonders geeignet, wenn die Elemente miteinander durch eine an ihren Innenflächen befestigte Lage von die Kantenrichtung kreuzenden, dehnungsarmen Fäden oder Fasern verbunden sind bzw. wenn die Fasern in Form eines Gewebes oder Vlieses vorliegen. Dehnungsarme Fasern sind, wie an sich bekannt, z.B. solche aus Polyimid, Glas oder aus Metall, insbesondere bestimmte Stahlsorten.

Die erfindungsgemässe Schutzvorrichtung lässt sich, wenn sie für den Schutz eines menschlichen Rückgrates vorgesehen ist, unter Verwendung von teilweise prismatischen oder kegelstumpfförmigen Blockelementen auch um die Seiten des Körpers ziehen, um aus dieser Richtung kommende Stösse oder Schläge aufzufangen, solange die erforderliche Beweglichkeit dabei nicht mehr als erträglich behindert wird.

Weitere Einzelheiten ergeben sich an Hand der nachfolgenden Beschreibung von in der Zeichnung schematisch dargestellten Ausführungsbeispielen.

Fig. 1 veranschaulicht das der Erfindung zugrundeliegende Prinzip an Hand eines ersten Ausführungsbeispieles, wohingegen die Fig. 2 und 3 Ausführungsvarianten zeigen.

Fig. 4 stellt ein einzelnes Element ähnlich der Ausführung nach Fig. 2 dar.

Die Fig. 5 und 6 zeigen weitere Ausführungsformen, wobei die Fig. 5 ebenso wie die vorhergehenden Figuren eine Perspektivdarstellung ist, die Fig. 6 dagegen ein Längsschnitt.

Wie nachstehend noch im einzelnen erläutert werden wird, ist die erfindungsgemässe Schutzvorrichtung so beschaffen, dass sie einem Druck an einer Seite nachgibt und daher völlig flexibel ist, einen Stoss oder Schlag von der anderen Seite her aber auffängt, sich dem Stosse widersetzt und die Form im wesentlichen beibehält. Auf diese Weise kann z.B. das Rückgrat von Zweiradfahrern oder Sportlern geschützt werden, ohne die Beweglichkeit zu beeinträchtigen.

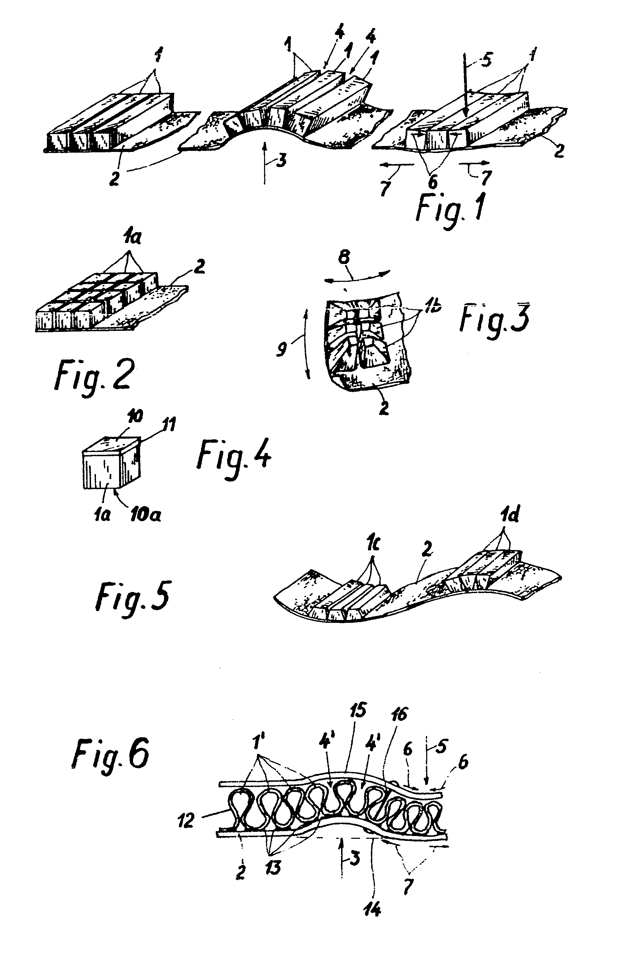

Dies kann beispielsweise in der in Fig. 1 gezeigten Art erfolgen, bei der einzelne, im wesentlichen abstandsfrei nebeneinanderliegende Elemente 1 in Prismenform an ihrer dem Körper zugewandten Seite zugfest über ein Gewebe oder eine Drahtmatte 2 miteinander verbunden sind. Statt des Gewebes 2 kann auch jede andere Art von Verbindung vorgesehen sein, die den vorbestimmten engen Abstand der Elemente voneinander und die Flexibilität der Elemente untereinander sichert. Beispielsweise könnten die Blockelemente 1 durch in ihre Seitenkanten, gegebenenfalls in einer Vertiefung derselben eingeschraubte und ineinandergreifende Metallösen oder eine andere Scharnierverbindung untereinander verbunden sein.

Vorzugsweise ist aber in der aus den Fig. 1 bis 3 und 5 ersichtlichen Art ein Vlies, ein Gewebe oder eine Drahtmatte 2 vorgesehen, wobei die Fasern möglichst senkrecht zu den Kanten der Blockelemente verlaufen und zweckmässig aus Polyimid, Glas oder Metall bestehen. Auch Reifencord eignet sich wegen seiner hohen Dehnfestigkeit gut.

Bei Bewegungen des Körpers wird auf das Gewebe 2 ein Druck im Sinne des Pfeiles 3 ausgeübt, wobei die Elemente 1 ausweichen und strahlenartig von der Oberfläche des Gewebes 2 abstehen, so dass sich zwischen ihnen keilförmig sich nach aussen zu öffnende Zwischenräume 4 ergeben. Sie behindern demnach die Beweglichkeit des Körpers nicht.

Erfolgt jedoch ein Stoss oder Druck von aussen im Sinne des Pfeiles 5, so müssten die Blockelemente 1, um nachgeben zu können, auch an der Unterseite solche keilförmigen Zwischenräume bilden, sind aber dort durch das Gewebe 2 od. dgl. hinsichtlich ihres Abstandes voneinander fixiert, woraus sich zweierlei ergibt: Einerseits werden die Aussenkanten der Elemente 1 durch die Stosskraft 5 im Sinne der Pfeile 6 gegeneinander gepresst und fangen so einen Teil der Stosskraft 5 auf. Anderseits übertragen die Elemente 1 auf das darunter liegende Gewebe 2 od. dgl. eine Zugkraft im Sinne der Pfeile 7, wodurch ein weiterer Anteil der Stosskraft 5 neutralisiert wird. Ein restlicher Teil der Stosskraft 5 wird zwar auch auf den Körper übertragen, verteilt sich aber auf eine verhältnismässig grosse Fläche, so dass der Flächendruck sehr gering ist. Der Grund hiefür liegt darin, dass die im Sinne der Pfeile 6 zusammengepressten Elemente 1 wie ein einziges grossflächiges Stück wirken.

Aus der obigen Darlegung ergibt sich als Konsequenz, dass es einerseits vorteilhaft ist, wenn zumindest die Aussenkanten der Elemente 1 verstärkt sind (vgl. Fig. 4), um dem Drucke 6 besser widerstehen zu können. Anderseits ist es wichtig, dass die Verbindung mit dem Gewebe 2 od. dgl. besonders fest ist, um auf dieses den Zug 7 übertragen zu können. Geeignete Verbindungen sind z.B. Klebung und/oder Anheftung mittels Klammern oder anderen an sich bekannten Verbindungsmitteln, wie Nieten, Nägel, Schrauben usw. Bei der Ausführung nach Fig. 1 kann sich wegen der prismatischen Form der Blockelemente 1 die Schutzvorrichtung auf Grund eines Druckes 3 nur in einer Richtung bzw. einer Ebene, d.h. im wesentlichen zylinderförmig, verformen. Wird dagegen eine grössere Beweglichkeit bzw. Flexibilität auch nach anderen Richtungen hin gewünscht, so können entsprechend Fig. 2 auch würfelförmige Elemente 1a vorgesehen sein. Ist schliesslich zusätzlich eine Biegsamkeit nach innen, d.h. gegen die Seite des Gewebes 2 oder einer entsprechenden Folie hin erwünscht, so können die einzelnen Elemente 1b auch pyramiden(stumpf)förmig gemäss Fig. 3 sein, was eine Durchbiegung nach innen im Sinne der Pfeile 8 und 9 erlaubt. Es versteht sich, dass bei zulässiger Durchbiegung nur im Sinne des Pfeiles 8 oder 9 die Abschrägung der Seitenflächen der Elemente 1b entsprechend vorgenommen sein kann.

Es wurde oben bereits erwähnt, dass es wegen der Druckkräfte 6 (Fig. 1) zweckmässig ist, die Aussenkanten bzw. die Aussenfläche 10 (Fig. 4) durch eine besonders druckfeste Schicht 11 zu verstärken. Diese Schicht 11 kann dann aus faserverstärktem Kunststoff oder aus Metall bestehen. Dabei sind zwei einander widersprechende Forderungen zu berücksichtigen: Einerseits soll die Druckfestigkeit im Bereiche der Schicht 11 möglichst gross sein, anderseits würde die Schutzvorrichtung bei Fertigung der Elemente aus vollem Metall zu schwer werden. Deshalb ist es vorteilhaft, wenn zumindest der Kern der (hohlen) Elemente aus Strukturschaum, insbesondere aus Polyurethan-Integralschaum besteht. Dieser Schaumstoff besitzt auch eine gewisse Elastizität und vernichtet durch seinen Verformungswiderstand einen zusätzlichen Anteil an Schlagenergie, ohne dass es zu einer Durchbiegung nach der zu schützenden Innenseite hin kommt. Gegebenenfalls kann auch an der Innenfläche ein biegesteiferes Material vorgesehen sein, um eben diese Durchbiegung zu verhindern. Selbstverständlich können auch andere Massnahmen zur Erzielung eines, insbesondere elastischen, Verformungswiderstandes vorgesehen sein. Beispielsweise kann die Schicht 11 viereckigen Grundrisses auf einem zylindrischen Elementkörper vorgesehen sein, dessen Erzeugende jedoch nicht Gerade sondern Wellenlinien sind, deren Wellen sich im Falle eines Stosses zusammenschieben. Herstellungsmässig ist es übrigens günstig, wenn die Schicht 11 aus einem mit dem Polyurethan-Schaumkern oder -Schaumelement integral verbundenen, druckfesten Polyurethan-Material besteht.

Es versteht sich, dass die Schicht 11 über die Fläche 10 hin auch unterbrochen ausgeführt sein kann, so dass sie im wesentlichen nur aus einem Kantenschutz für die Würfel- oder Prismenkanten, gegebenenfalls mit einem dazwischen liegenden versteifenden Fachwerk, besteht. Es versteht sich ebenso, dass die Verstärkungsschicht 11 für die Kanten der Aussenfläche 10 auch an anders als das Element 1a in Fig. 4 geformten Elementen, z.B. an den Elementen 1, 1b, 1c oder 1d, vorgesehen sein kann. Wenn auch in den Fig. 1 bis 5 jeweils nur wenige Elemente 1 bzw. 1a bis 1d der Einfachheit halber dargestellt sind, so ist doch klar, dass in der Praxis die Bahn 2 von ihnen völlig bedeckt ist. Anderseits ist es zum Schutze nur einzelner gefährdeter Stellen des Körpers durchaus möglich, die Elemente jeweils nur im Bereiche dieser Stellen anzuordnen und dazwischen die Bahn 2 von ihnen frei zu lassen, die, wie erwähnt, mit den Innenflächen 10a der Blockelemente verbunden ist.

Wie Fig. 5 deutlich zeigt, sind die oben erwähnten Elemente 1c, 1d trapezförmigen Querschnitts und jeweils umgekehrter Anordnung dort von Vorteil, wo sich die Schutzvorrichtungen verschieden gerichteten Krümmungen anzupassen hat. Dies ist gerade beispielsweise bei der Wirbelsäule der Fall. Gewünschtenfalls können, etwa für andere Anwendungszwecke, auch andere Elemente verschiedener Form an einer einzigen Schutzvorrichtung in Kombination angeordnet werden. Dies kann besonders zum Schutze mehrerer Körperstellen von Vorteil sein, um sich den jeweiligen Bewegungsbedürfnissen anzupassen.

Bei der besonders bevorzugten Ausführung nach Fig. 6 sind die einzelnen Elemente 1' von den eng nebeneinander, im Querschnitt mäanderförmig angeordneten, bauchigen Schlingen eines schichtförmigen Materials 12 gebildet. Dieses schichtförmige Material 12 ist verhältnismässig steif und besteht beispielsweise aus Blech, vorzugsweise aber aus einer steifen Kunststoffolie, die z.B. eine Stärke von 2 mm haben kann. Die die Elemente 1' bildenden Schlingen dieses Materials 12 sind in der aus Fig. 6 ersichtlichen Weise derart birnenförmig gebaucht, dass sich normalerweise die Schlingen mit ihren Bauchseiten gegeneinander abstützen. Dabei kann die Schlingenhöhe in der Praxis beispielsweise 20 mm betragen. Erst bei Druck im Sinne des Pfeiles 3 von der Innenseite her ergeben sich wiederum Zwischenräume 4', die funktionsmässig den Zwischenräumen 4 der Fig. 1 entsprechen. Im umgekehrten Fall, nämlich bei Stoss oder Druck im Sinne des Pfeiles 5 von aussen, werden die Schlingenelemente 1' durch die Druckkräfte 6 gegeneinander gedrückt, wobei die Elastizität der Schlingen bzw. des Materials 12 einen Verformungswiderstand zur Aufnahme eines zusätzlichen Anteiles der Druckkraft 5 ergibt. Daraus ist schon der Vorzug dieser Ausführung zu erkennen, weil hier ein besonders leichtes, einfach zu verarbeitendes und dennoch festes und haltbares Material zur Bildung aller Elemente 1' aus einem Stück verwendet wird.

An der Innenseite entstehen bei Druck von aussen (Pfeil 5) wiederum Zugkräfte 7, die auf die darunterliegende Bahn 2, zweckmässig ebenfalls aus Kunststoffmaterial, über die in Fig. 6 an der Unterseite der Schlingenelemente 1' jeweils angedeuteten Klebestellen 13 übertragen werden. An Hand der strichlierten Linie 14 ist ersichtlich, dass sich fast keine Druckverformung der Schutzvorrichtung nach innen ergibt, jedoch mag die Stärke bzw. Schlingenhöhe unter Druck abnehmen, wie aus einem Vergleich der linken und der rechten Seite der Fig. 6 ersichtlich ist. Jedenfalls haben praktische Versuche gezeigt, dass eine solche Schutzvorrichtung gegen Schläge von aussen im Sinne des Pfeiles 5 hart wie ein Brett oder eine Schildplatte ist und diese vom Körper gut abzuhalten vermag.

Nach den Darstellungen der Fig. 1 bis 5 wären die Elemente 1 und 1a bis 1d nach aussen hin völlig ungeschützt und könnten daher leicht irgendwo hängen bleiben und dann aus ihrer Verankerung gerissen werden. Deshalb ist es vorteilhaft, wenn die Schutzvorrichtung an der Aussenseite der Elemente jeweils eine diese überdeckende, gegebenenfalls elastische Schutzschicht 15 aufweist. In Fig. 6 ist diese Schutzschicht 15 in einem kleinen Abstand von der Oberseite der Schlingenelemente 1' dargestellt, um anzudeuten, dass diese Schicht 15 mit den Schlingenelementen 1' nicht verbunden ist bzw. es nicht sein darf, um die Bildung der Zwischenräume 4' bei Druck im Sinne des Pfeiles 3 von innen zu sichern und so die Biegsamkeit nach einer Seite hin zu wahren. Die Schutzschicht 15 kann mit der Bahn 2, vorzugsweise am seitlichen Aussenrand der Schutzvorrichtung, insbesondere durch Verschweissen, verbunden sein, es können aber auch zwischen den Schlingenelementen 1' Verbindungsschnüre oder -bänder 16 zur Verbindung der beiden Bahnen bzw. Schichten 2 bzw. 15 vorgesehen sein. Wenn auch die Schutzschicht 15 nur an Hand der Fig. 6 veranschaulicht ist, so ergibt sich aus den obigen Erläuterungen ohne weiteres, dass sie auch bei den übrigen Ausführungsformen vorgesehen sein kann. Sie kann im wesentlichen aus denselben Materialien wie die Bahn 2 gebildet sein, muss aber in einer bestimmten Schutzvorrichtung nicht jeweils aus dem gleichen Material bestehen.

Im Rahmen der Erfindung sind zahlreiche verschiedene Ausführungsformen möglich; falls beispielsweise als Verbindung zwischen den Blockelementen 1 oder 1a bis 1d starke Fäden, Ketten oder Drähte vorgesehen sind, können diese nahe der Innenfläche 10a auch durch Löcher an den Blockelementen gezogen sein, so dass diese wie die Perlen an der Schnur aufgefädelt und zweckmässig durch Knoten oder andere Befestigungen unverrückbar gehalten sind. Ferner könnte das Material 12 derart mit einer Rippenschicht versehen sein, dass die Rippen jeweils die aneinanderliegenden Bauchflächen, gegebenenfalls auch die Aussenfläche, der Schlingenelemente 1' verstärken und so die Rolle der Schicht 11 übernehmen. Diese Rippenschicht kann entweder bis zur Seitenfläche reichen oder nur dort vorgesehen sein, so dass die Schlingenelemente 1' sich jeweils mit ihren Rippen gegeneinander abstützen. Selbstverständlich können die Rippen aber auch einstückig aus dem Material 12 gebildet sein. Übrigens ist auch aus Fig. 4 ersichtlich, dass die Schicht 11 entsprechend ihrer Stärke einen Teil der Seitenfläche des Blockelementes 1a einnimmt.

## Patentansprüche

1. Flächige Schutzvorrichtung mit einer dem zu schützenden Körper zugewandten, flexiblen, zugfest ausgebildeten Unterlage (2), auf der einander benachbarte – in jeder Richtung parallel zur Unterlage druckfeste Elemente (1; 1a–1d; 1') befestigt sind, deren Breite in zumindest einer Richtung nicht wesentlich grösser oder kleiner als deren Höhe ist, wobei die Elemente (1; 1a–1d; 1') zum Schutz gegen ein Abknicken des Körpers infolge eines Stosses oder Schlages so abstandfrei nebeneinander liegen, dass durch das Aneinanderpressen der Elemente (1; 1a–1d; 1') nur ein geringfügiges Krümmen (8, 9) der Schutzvorrichtung nach der Seite, an der die Elemente (1; 1a–1d; 1') angebracht sind, möglich ist, und wobei die aneinander zu pressenden Seitenwände der Elemente (1; 1a–1d, 1') im wesentlichen durchgehend glatt und einteilig ausgebildet sind.

2. Schutzvorrichtung nach Anspruch 1, dadurch gekennzeichnet, dass die Elemente (1a) nur in Richtung senkrecht zum erwarteten Stoss oder Schlag druckfest ausgebildet sind.

3. Schutzvorrichtung nach Anspruch 1 oder 2, dadurch gekennzeichnet, dass die Elemente (1; 1c; 1d) in wenigstens einer Reihe angeordnete vierseitige Prismen von vorzugsweise rechteckigem (1) oder trapezförmigem (1c; 1d) Querschnitt sind.

4. Schutzvorrichtung nach Anspruch 1, dadurch gekennzeichnet, dass die Elemente (1b) in wenigstens zwei Reihen angeordnete vierseitige Pyramiden(stümpfe) sind.

5. Schutzvorrichtung nach Anspruch 1, dadurch gekennzeichnet, dass die Elemente (1') von den eng nebeneinander, im Querschnitt mäanderförmig angeordneten, bauchigen Schlingen eines schichtförmigen Materials (12), wie einer steifen Kunststoffolie oder Blech, gebildet sind.

6. Schutzvorrichtung nach einem der vorhergehenden Ansprüche, dadurch gekennzeichnet, dass die Elemente (1a) an ihren Aussenflächen (10) und/oder Seitenflächen wenigstens eine, die Druckfestigkeit in Richtung senkrecht zum Schlag (5) erhöhende Schicht (11) aufweisen.

7. Schutzvorrichtung nach einem der vorhergehenden Ansprüche, dadurch gekennzeichnet, dass zumindest der Kern der Elemente (1; 1a bis 1d; 1') aus Strukturschaum, insbesondere Polyurethan-Integralschaum, besteht.

8. Schutzvorrichtung nach den Ansprüchen 6 und 7, dadurch gekennzeichnet, dass die Schicht (11) aus einem mit dem Polyurethan-Schaumkern integral verbundenen, druckfesten Polyurethan-Material besteht.

9. Schutzvorrichtung nach einem der vorhergehenden Ansprüche, dadurch gekennzeichnet, dass die Elemente (1; 1a bis 1d; 1') miteinander durch eine an ihren Innenflächen (10a) befestigte Lage (2) von die Kantenrichtung kreuzenden, dehnungsarmen Fäden oder Fasern verbunden sind.

10. Schutzvorrichtung nach Anspruch 9, dadurch gekennzeichnet, dass die Fasern in Form eines Gewebes (2) oder Vlieses vorliegen.

11. Schutzvorrichtung nach Anspruch 9 oder 10, dadurch gekennzeichnet, dass die Fasern aus Polyimid, Glas oder Metall bestehen.

12. Schutzvorrichtung nach einem der vorhergehenden Ansprüche, dadurch gekennzeichnet, dass sie an der Aussenseite (10) der Elemente (1; 1a bis 1d; 1') eine diese überdeckende, gegebenenfalls elastische Schutzschicht (15) aufweist.

## Revendication

1. Dispositif de protection aplati, muni d'un substrat (2) flexible résistant à la traction, tourné vers le corps devant être protégé et sur lequel sont fixés des éléments juxtaposés (1; 1a–1d; 1'), – parallèles au substrat dans chaque direction et résistant à la compression –, dont la largeur dans au moins une direction n'est pas sensiblement supérieure ou inférieure à la hauteur, les éléments (1; 1a–1d; 1') destinés à la protection du corps vis-à-vis des déformations par suite d'un choc ou d'un impact se juxtaposant à de faibles intervalles, d'une manière telle que le rapprochement des éléments (1; 1a–1d; 1') n'autorise qu'un léger pliage (8, 9) du dispositif de protection vers le côté sur lequel sont agencés les éléments (1; 1a–1d; 1') et les parois latérales à rapprocher par compression entre elles des éléments (1; 1a–1d; 1') sont conçues de façon essentiellement plate dans leur totalité et d'un seul tenant.

2. Dispositif de protection selon la revendication 1, caractérisé par le fait que les éléments (1a) sont réalisés résistants à la pression seulement dans la direction perpendiculaire au choc ou à l'impact escompté.

3. Dispositif de protection selon la revendication 1 ou 2, caractérisé par le fait que les éléments (1; 1c; 1d) consistent en des prismes à quatre côtes, agencés en au moins une rangée et présentant de préférence une section rectangulaire (1) ou trapézoïdale (1c; 1d).

4. Dispositif de protection selon la revendication 1, caractérisé par le fait que les éléments (1b) consistent en des pyramides (tronquées) à quatre côtes, agencées en au moins deux rangées.

5. Dispositif de protection selon la revendication 1, caractérisé par le fait que les éléments (1') sont formés par les boucles ventrues, étroitement juxtaposées et disposées selon une section transversale en méandres, d'un matériau stratiforme (12) tel qu'une feuille de matière plastique ou une tôle rigide.

6. Dispositif de protection selon l'une des revendications précédentes, caractérisé par le fait que les éléments (1a) présentent, sur leurs faces externes (10) et/ou leur faces latérales, au moins une couche (11) accroissant la résistance à la pression dans la direction perpendiculaire à l'impact (5).

7. Dispositif de protection selon l'une des revendications précédentes, caractérisé par le fait qu'au moins le noyau des éléments (1; 1a à 1d; 1') consist en une mousse structurée, en particulier en une mousse de polyuréthane à peau intégrée.

8. Dispositif de protection selon les revendications 6 et 7, caractérisé par le fait que la couche (11) consiste en un polyuréthane résistant à la pression et relié d'un seul tenant au noyau en mousse de polyuréthane.

9. Dispositif de protection selon l'une des revendications précédentes, caractérisé par le fait que les éléments (1; 1a à 1d; 1') sont reliés les uns aux autres par l'intermédiaire d'une couche (2), qui est fixée à leurs faces internes (10a) et consiste en des fils ou des fibres à faibles expansion, croisant la direction des arêtes.

10. Dispositif de protection selon la revendication 9, caractérisé par le fait que les fibres se présentent sous la forme d'un tissu (2) ou d'un feutre.

11. Dispositif de protection selon la revendication 9 ou 10, caractérisé par le fait que les fibres consistent en un polyimide, en du verre ou en un métal.

12. Dispositif de protection selon l'une des revendications précédentes, caractérisé par le fait qu'il comporte, à la face externe (10) des éléments (1; 1a à 1d; 1'), une couche protectrice (15) qui est éventuellement élastique et recouvre lesdits éléments.

## Claims

1. Sheet-like protective apparatus having a flexible underlay (2) which face the body to be protected and has high tensile strength and on which adjacent elements (1; 1a–1d; 1') which are non-compressible in every direction parallel to the underlay and whose width in at least one direction is not substantially larger or smaller than its height, the elements (1; 1a–1d; 1'), in order to prevent bending of the body as a result of a shock or impact, lying adjacent to one another without an intermediate space in such a way that pressing together of the elements (1; 1a–1d; 1') permits only a slight curvature (8, 9) of the protective apparatus towards the side on which the elements (1; 1a–1d; 1') are mounted, and those side walls of the elements (1; 1a–1d; 1') which are to be pressed together being essentially continuously smooth and consisting of a single piece.

2. A protective device as in Claim 1, characterized in that the elements (1a) are made pressure-resistant only the direction perpendicular to the expected thrust or blow.

3. A protective device as in Claim 1 or 2, characterized in that the elements (1; 1c; 1d) are four-sided prisms arranged in at least one row and of preferably rectangular (1) or trapezoidal (1c; 1d) cross-section.

4. A protective device as in Claim 1, characterized in that the elements (1b) are foursided pyramids (truncated) arranged in at least two rows.

5. A protective device as in Claim 1, characterized in that the elements (1') are formed of the bulgy loops of a laminar material (12) such as a stiff plastics foil or sheetmetal, arranged closely side by side to have in cross-section the form of a meander.

6. A protective device as in one of the preceding Claims, characterized in that the elements (1a) exhibit on their outer faces (10) and/or side-faces at least one layer (11) which increases the pressure-resistance in the direction perpendicular to the blow (5).

7. A protective device as in one of the preceding Claims, characterized in that at least the core of the elements (1; 1a to 1d; 1') consists of structural foam, in particular polyurethane integral foam.

8. A protective device as in Claims 6 and 7, characterized in that the layer (11) consists of a pressure-resistant polyurethane material bonded integrally to the polyurethane foam core.

9. A protective device as in one of the preceding Claims, characterized in that the elements (1; 1a to 1d; 1') are connected together by a layer (2) fastened to their inner faces (10a), of stretch-resistant threads or fibres crossing the corner direction.

10. A protective device as in Claim 9, characterized in that the fibres are present in the form of a weave (2) or a web.

11. A protective device as in Claim 9 or 10, characterized in that the fibres consist of polyimide, glass or metal.

12. A protective device as in one of the preceding Claims, characterized in that it exhibits on the outside (10) of the elements (1; 1a to 1d; 1') a protective layer (15) covering them, which if necessary is elastic.

Fig. 1

Fig. 2

Fig. 3

Fig. 4

Fig. 5

Fig. 6